# EUROPÄISCHE PATENTSCHRIFT

(11) **EP 1 877 853 B1**
(45) Veröffentlichungstag und Bekanntmachung des Hinweises auf die Patenterteilung: **28.07.2010**
(21) Anmeldenummer: 06742305.3
(22) Anmeldetag: 02.05.2006
(51) Int. Cl.: G02C 5/00, G02C 5/14, G02C 1/02

(54) **VORRICHTUNG ZUM WECHSELN VON BÜGELN, BACKEN UND STEG FÜR RANDLOSBRILLEN SOWIE VON BÜGELN UND BACKEN FÜR METALL- UND KUNSTSTOFF-BRILLENGESTELLE**
DEVICE FOR CHANGING BRIDGES, SIDE ARMS AND BROWBARS OF RIMLESS SPECTACLES, AND FOR CHANGING BRIDGES AND SIDE ARMS OF METALLIC AND PLASTIC SPECTACLE FRAMES
DISPOSITIF POUR CHANGER DES BRANCHES, DES TENONS ET DES BARRES DE MONTURES DE LUNETTES SANS BORD, AINSI QUE DES BRANCHES ET DES TENONS DE MONTURES DE LUNETTES EN METAL OU EN MATIERE PLASTIQUE

(30) Priorität: 04.05.2005 DE 102005020738; 08.06.2005 DE 102005026260
(43) Veröffentlichungstag der Anmeldung: 16.01.2008
(73) Patentinhaber: Wied, Günther, 94036 Passau (DE); Strenz, Michael, 94474 Vilshofen (DE)
(72) Erfinder: Wied, Günther, 94036 Passau (DE); Strenz, Michael, 94474 Vilshofen (DE)
(74) Vertreter: Wasmeier, Alfons
(86) Internationale Anmeldenummer: PCT/DE2006/000765
(87) Internationale Veröffentlichungsnummer: WO 2006/116988

(56) Entgegenhaltungen:
- WO-A-2005/033781
- DE-A1- 4 219 039
- US-A- 6 007 199
- US-A1- 2004 169 815

## Beschreibung

Die Erfindung Befrifft Vorrichtungen nach dem Oberbegriff des Anspruches 1 sowie Verfahren nach Anspruch 8.

Von Brillenträgern werden in zunehmendem Maße Brillen verlangt, die veränderbar ausgestaltet sind und bei denen die auf die individuellen Bedürfnisse abgestimmten Gläser mit unterschiedlichen Brillengestellen kombiniert und variiert werden können. Hierzu wird auf zahlreiche Vorschläge in der Literatur hingewiesen, bei denen Brillengestelle von Randlosbrillen mit den Gläsern durch Schraubverbindungen so verbunden werden, dass Verbindungselemente, Halteglieder oder dergl. an den Brillengläsern festgeschraubt oder festgeklemmt werden, damit der Brillenträger selbst oder der Augenoptiker ein Gestell relativ einfach gegen ein anderes Gestell auswechseln kann. Ein derartiges wiederholtes Austauschen führt jedoch zu der Schwierigkeit, dass wertvolle Gläser in Verbindung mit randlosen Brillen leicht beschädigt werden können, so dass ein Handling am Glas bei einem Wechsel des Gestells vom Markt nicht akzeptiert wird.

Aus der D1 (US 2004/0169815 A1) ist ein System zum Befestigen von Backenbügeln an Randlosbrillen bekannt, bei dem die Backenbügel auswechselbar ausgebildet sind, damit der Brillenträger seine Brillengläser behalten kann, wenn er das Aussehen seiner Brille ändern will. Ausgewechselt hierbei werden ausschließlich die Backenbügel, nicht aber der Steg. Für diesen Wechselvorgang wird eine L-förmige Schraubanordnung vorgesehen, deren beide entgegen gesetzten Enden mit Gewinde versehen sind. Das Befestigungssystem besteht aus einer mit dem Backenbügel zu verbindenden und einer mit dem Brillenglas zu verbindenden Schraube. Erstere ist etwa parallel zur Ebene des Brillenglases ausgebildet, letztere etwa vertikal zur Brillenglasebene.

Aus den Figuren 4 und 6 der D1 ergibt sich, dass der horizontale Stiftteil am freien Ende einen Schlitz aufweist, in den das zweimal abgebogene Ende der Wechselbacke eingesetzt wird, und dass zur Herstellung der Verbindung einmal das Einlegen eines Wechselbackenteiles in den Schlitz und ferner das Aufschrauben eines Dübels auf das Trägerelement erforderlich ist, damit die Wechselbacke in ihrer gewünschten Position festgelegt werden kann.

Gegenstand der D2 (US 2003/0058402 A1) ist ein Befestigungssystem zum Verbinden von Brillengläsern mit den Backen und den Stegen des Brillengestells, um zu erreichen, dass die Verbindungselemente sich nicht lösen, herausfallen und verloren gehen. Hierzu werden Steckelemente mit Kunststoffbuchsen verwendet, wobei die Steckelemente anstelle von Schraubgewinden rastartige Elemente ausbilden, die in den Kunststoffbuchsen verriegelt werden. Diese Steckelemente werden durch Bohrungen des Brillenglases und die zugeordnete Bohrung der Backe des Brillengestells durch das Brillenglas hindurch, also vertikal zur Glasebene geführt und entsprechende Verriegelungen in der Drehachse der Backe, die den Backenbügel aufnimmt, eingesetzt, so dass damit herkömmlichen Schraubverbindungen durch druckknopfartige Steckverbindungen in zwei zueinander senkrechten Ebenen der Brille vorgenommen werden, um ein Auswechseln zu erreichen. Das Zusammenführen und Lösen dieser Steckverbindung ist in der Regel nur mit Werkzeug oder erheblichem Kraftaufwand möglich, wobei dabei durchaus die Gefahr besteht, dass das Brillenglas und/oder der Bügel beschädigt wird.

Aus D3 (US 6,210,002 B1) ist eine Befestigung der Backen mit Brillengläsern beschrieben und dargestellt. Die Backe weist an ihrem brillenseitigen Ende zwei Schäfte auf, deren einer durch eine Bohrung im Brillenglas und deren anderer außerhalb des Brillenglases angeordnet ist. Beide Schäfte sind mit ihrem freien Ende in Befestigungsblock verbunden ist. Die beiden Schäfte besitzen Rastelemente, die elastisch nachgiebig sind und in Buchsen des Befestigungsblockes rastend verbunden sind, so dass damit anstelle einer Schraubverbindung eine gewindefreie Klemmverbindung entsteht. Diese Verbindung erfolgt vertikal zur Ebene des Brillenglases hergestellt wird und nach Art eines Druckknopfes geschlossen oder geöffnet wird.

Gegenstand der DE-A-4219039 betrifft eine Brillenfassung mit abnehmbaren Ohrbügeln, welche einen Austausch der Ohrbügel ohne Werkzeug ermöglicht und bei welcher eine Rasteinrichtung in normaler Bügelstellung in einer Einrastrichtung einrastet.

Aufgabe der Erfindung ist, Wechselbrillen mit randlosen Brillengläsern so auszugestalten, dass die Verbindung zwischen Brillenglas, Trägerelement und Verbinder zum Backenteil eine hohe Stabilität hat, das mit dem Brillenglas verbundene Trägerelement von dem Verbinderteil vollständig überdeckt ist, das Verrasten bzw. das Einklicken zwischen Trägerelement und Verbinderteil eine spielfreie exakte Kopplung liefert, und die Montage bei einem Gestellwechsel besonders einfach und teileschonend ist. Des weiteren ist Aufgabe der Erfindung, Wechselbrillen mit Metall- oder Kunststoffgestell vorzuschlagen, bei denen das Trägerelement mit dem Rahmengestell auf seiner gesamten Länge verbunden und von dem Verbinderteil zum Backenteil vollständig überdeckt ist, das Verrasten bzw. Einklicken zwischen Trägerelement und Verbinderteil eine spielfreie exakte Kopplung ergibt und die Montage bei einem Gestellwechsel besonders einfach sowie vom Träger der Brille ohne Werkzeug und beliebig oft durchführbar ist. Gemäß der Erfindung wird dies mit den Merkmalen des Kennzeichens des Anspruches 1 bzw. des Anspruches 8 erreicht.

Weitere Ansgestaltungen der Erfindung sind Gegenstand des Unteransprüche.

Nach einem ersten Aspekt der Erfindung ist für randlose Brillen das Trägerelement als im wesentlichen stabförmiges, schienenförmiges oder plättchenförmiges Metallteil, z.B. mit T-förmigem Querschnitt, mit einem Gewindestift aus Metall und einem zusätzlichen Positionierstift oder wahlweise einem zweiten Gewindestift aus Metall mit zugehöriger Bohrung im Brillenglas ausgebildet, das Brillenglas weist eine vom Glasrand beabstandete, durchgehende Bohrung zur Aufnahme des Gewindestiftes und eine Ausnehmung am Brillenglasrand zur Aufnahme des Positionierstiftes auf, das glasseitige Ende der Backe aus Kunststoff bzw. eines Verbinderteils an der Backe zwischen Trägerelement und Backenbügel aus Kunststoff hat eine der Form des Metallteiles angepasste Ausnehmung mit der Länge des Metallteiles und dieses umgreifend, und die Ausnehmung der Backe besitzt mindestens zwei Raststellen an den Innenseitenbegrenzungen aus Kunststoff, die mit dem Gewindestift und dem Positionierstift zusammenwirkend ausgebildet sind.

Nach einem weiteren Aspekt der Erfindung ist bei Wechselbrillen mit Kunststoff- oder Metallgestell das Trägerelement als stabförmiges, schienenförmiges oder plättchenförmiges Metallteil in T-Form an den bügelseitigen Enden des Brillen-Mittelteils befestigt, das glasseitige Ende des Backenbügels aus Kunststoff oder des Verbindungsstückes zwischen Trägerelement und Backenbügel ist mit einer der Form des Trägerelementes angepassten Ausnehmung von der Länge des Trägerelementes und dieses umgreifend versehen, und die Ausnehmung des Backenteils mit mindestens zwei Raststellen an den Innenseitenbegrenzungen aus Kunststoff ausgestattet, die mit den Stiften des Trägerelementes zusammenwirkend ausgebildet sind.

Mit dem erfindungsgemäßen Vorschlag wird bei Randlosbrillen aufgrund des Einschraubens des Trägerelementes aus Metall in das Brillenglas eine stabile Halterung gewährleistet, mit der jederzeit und beliebig oft wiederholbar ein Lösen des Trägerelementes vom Brillenglas möglich ist, wobei das Trägerelement als Metallteil eine extrem hohe Festigkeit bei gleichzeitig geringem Überstand über der Oberfläche des Brillenglases ermöglicht, die Sicherung mittels Verschraubung eine hochwertige Festlegung des Trägerelementes am Brillenglas ergibt, bei einem Wechsel des Rahmengestells das gesamte Trägerteil überdeckt wird, und damit in Hinblick auf die Qualität und das Design eine wesentliche Verbesserung gegenüber herkömmlichen Vorrichtungen erreicht wird.

Analog einer Ausführung für Randlosbrillen wird bei einer weiteren Ausgestaltung der Erfindung für Metall- oder Kunststoffrahmengestellbrillen durch den Einsatz eines Trägerelementes aus Metall eine einfache und zweckmäßige Wechselvorrichtung erzielt, mit deren Hilfe das jeweilige Backenteil aus dem Trägerelement unter Krafteinwirkung von Hand bequem abgezogen und eine Wechselbacke oder ein Wechselbügel aufgeschoben werden kann, wobei beim Abziehen und Aufschieben jeweils der Widerstand der Doppel- oder auch Mehrfachraststelle überwunden werden muss, durch diese Doppel- oder Mehrfach-Raststelle aber eine besonders stabile Halterung erreicht wird.

In weiterer Ausgestaltung der Erfindung werden für einen Wechsel der Backenteile Trägerelemente an den Metallscharnieren zur Aufnahme und Befestigung der Backenteile vorgesehen, die mit dem feststehenden und dem beweglichen Teil des Scharniers fest verbunden sind und die mit dem Trägerelement aufsteckbar oder einschiebbar ausgebildete Verbindungsvorrichtungen aufweisen, so dass durch einfaches Abziehen der Backe und des Bügels des Backenteiles sowie durch Aufschieben oder Aufstecken einer neuen Backe bzw. eines neuen Bügels ein Wechsel des Gestells ohne jegliches Werkzeug möglich ist. Dabei weist die Backe einen entsprechenden Verbinderteil am Anschluss zum Mittelteil des Brillengestells auf, die auf das am Mittelteil befestigte Trägerelement aufsteckbar oder aufschiebbar ist.

Eine andere Ausführungsform der Erfindung sieht vor, dass die Backe oder der dem Brillenglas zugewandte Abschnitt der Backe aus federndem Material, z.B. Federstahl oder Spezialkunststoff besteht, damit die schlitzartige Ausbildung der Stecköffnung des Backenendes bei Durchführung der Steckverbindung zwischen Schraubenschaft und Rastaufnahme sich gabelzinkenartig aufweitet und die beiden Schraubenschäfte nacheinander rastend aufnimmt und wieder in die Ausgangsstellung zurückkehrt. Dadurch wird eine eindeutig definierte und exakte Eingriffsposition erreicht. Vom Material her gesehen kann die Verbindung Metall/Metall, Metall/Kunststoff oder Kunststoff/Kunststoff sein, wenn ein Kunststoffmaterial verwendet wird, das einerseits eine extrem hohe Festigkeit und andererseits eine hohe Rückstellkraft besitzt. Nachstehend wird die Erfindung in Verbindung mit der Zeichnung anhand eines Ausführungsbeispiels erläutert. Es zeigt:
- Fig. 1: eine Darstellung des Trägerelementes in seitlicher Ansicht,
- Fig. 2: das Trägerelement in einer Ansicht von rechts nach Fig. 1,
- Fig. 3: das Trägerelement in einer Ansicht von unten,
- Fig. 4: das Verbinderteil (Backe) in einer Ansicht von unten,
- Fig. 5: das Verbinderteil (Backe) in seitlicher Ansicht, und Fig. 5a im Schnitt I-I,
- Fig. 6: eine schematische Darstellung eines Brillenglasabschnittes mit der erfindungsgemäßen Vorrichtung (in verkleinertem Maßstab, während die Figuren 1 - 5 in einem Maßstab von 10 : 1 dargestellt sind),
- Fig. 7: eine schematische Darstellung eines Brillenglasabschnittes mit der erfindungsgemäßen Vorrichtung, gesehen von der entgegengesetzten Seite,
- Fig. 8: eine abgeänderte Ausführungsform der Erfindung mit Metall-Mittelteil,
- Fig. 9: eine weitere abgeänderte Ausführungsform der Erfindung mit einem Mittelteil aus Kunststoff,
- Fig. 10: die Teildarstellung eines Backenteils mit aufsteckbarem bzw. aufschiebbarem Bügel und aufschiebbarer oder aufsteckbarer Backe sowie aneinander stoßenden Metallabschnitten am Scharnier,
- Fig. 11: eine abgeänderte Ausführungsform nach Fig. 10, ohne Metallteile an Backe und Bügel,
- Fig. 12: eine Metallbacke aus Federmaterial,
- Fig. 13: die Backe nach Fig. 12 mit dem Trägerbügel auf dem Brillenglas zusammengeführt, und
- Fig. 14: eine Gesamtansicht einer Wechselbrille mit erfindungsgemäßer Steckvorrichtung in Explosionsdarstellung.

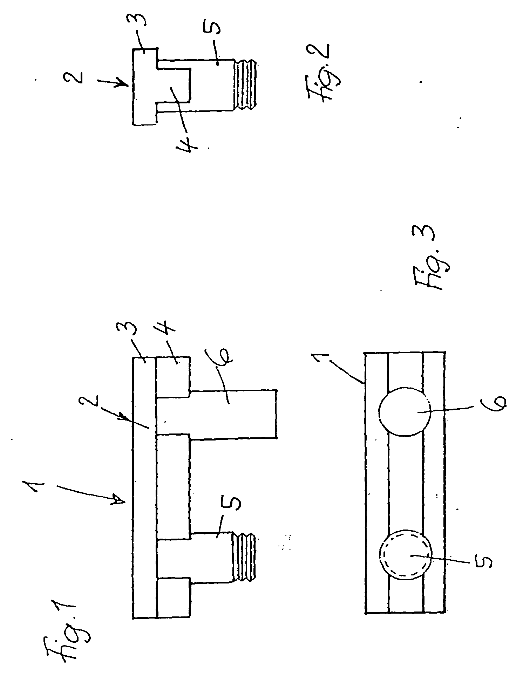

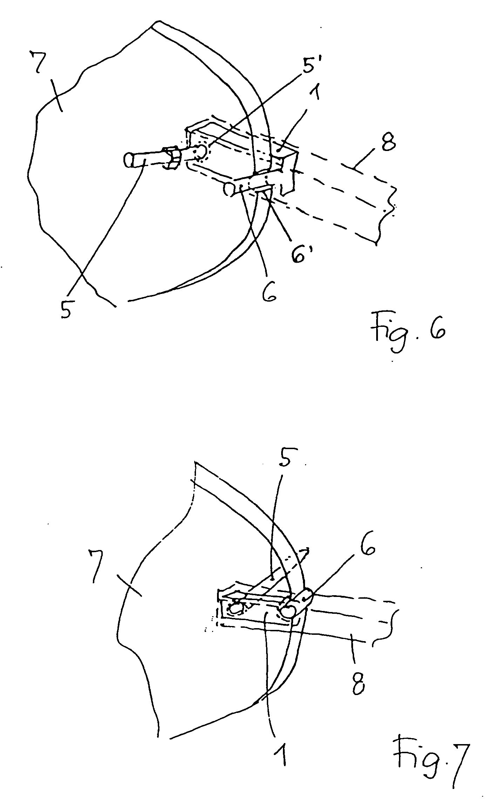

In den Figuren 1 - 3 ist in drei verschiedenen, jeweils um 90° zueinander versetzten Ansichten, das Trägerelement 1 dargestellt, das auf der Sichtseite des Brillenglases oder des Brillengestelles befestigt wird. Das Trägerelement 1 ist ein trägerförmiges Metallbauteil mit einem Querschnitt in Form eines länglichen Balkens 3 und eines Schaftes 4 gleicher Erstreckung wie der Balken 3. Ausgehend vom Schaft 4 sind ein Schraubstift 5 und ein im Abstand dazu angeordneter Positionierstift 6 oder ein weiterer Gewindestift 6 mit dem Trägerelement 1 an der Unterseite des Balkens 3 vorgesehen, wobei der Schaft des Schraubstiftes 5 wie auch des Positionierstiftes 6 einen größeren Durchmesser hat als der Querschnitt des Schaftes 4. Der Gewindestift 5 ist durch eine Bohrung 5' (Fig. 6) im Brillenglas 7 geführt und wird abhängig von der Glasdicke anschließend nach Bedarf gekürzt und mittels Schraubmutter am Gewindestift festgelegt. Der Positionierstift 6 ist in eine am Brillenglasrand offene Teilbohrung 6' eingesetzt, so dass die Lage des Trägerelementes 1 auf dem Brillenglas eindeutig definiert ist. Alternativ kann ein weiterer Gewindestift 6 ebenfalls das Brillenglas durchsetzend angeordnet sein. Die Länge des Trägerelementes 1 wird durch den Abstand der beiden Stifte 5, 6 voneinander bestimmt, wobei die Bohrung des Gewindestiftes einen ausreichenden Sicherheitsabstand vom Brillenglasrand haben muss, damit eine Beschädigung des Glases durch Bohren und Beanspruchen ausgeschlossen wird.

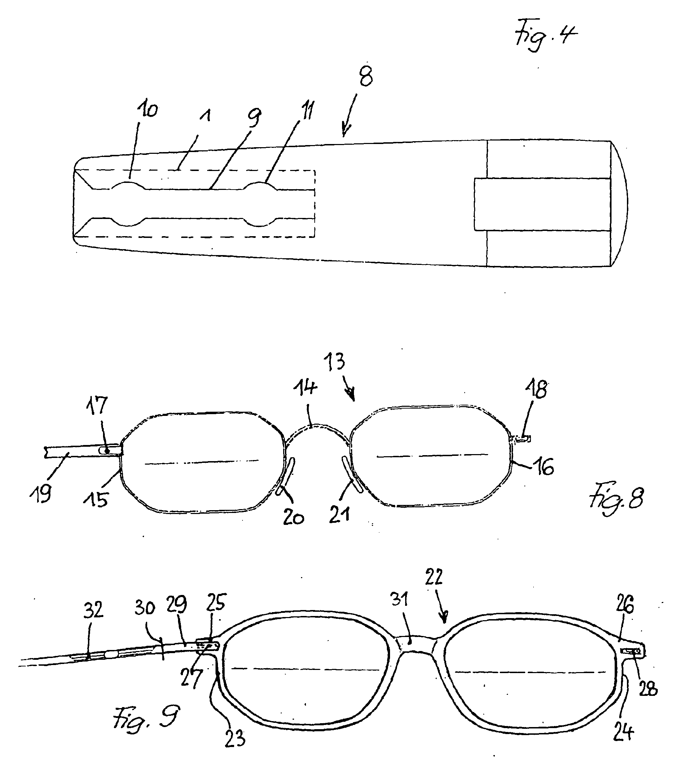

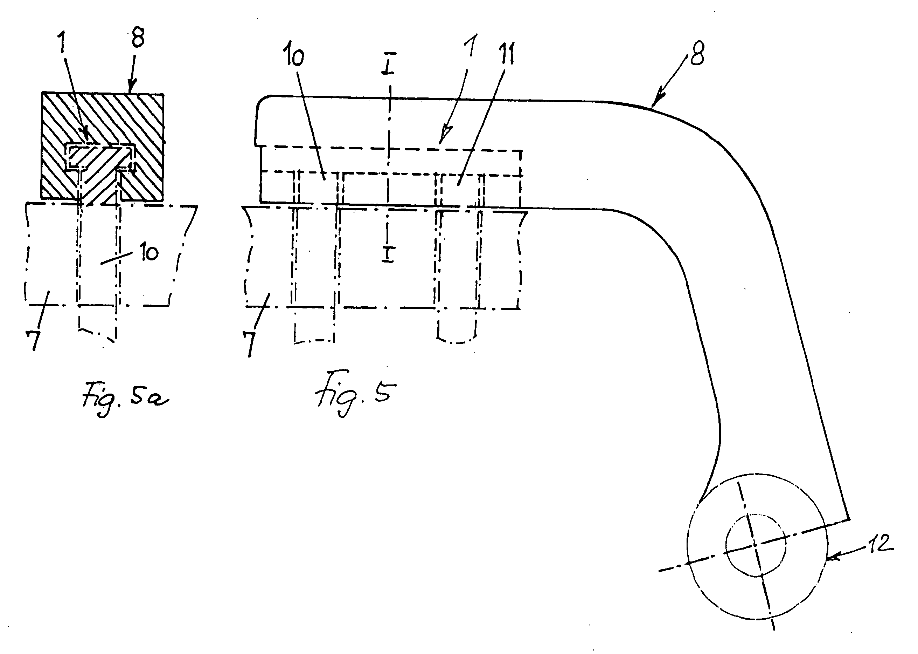

Das Verbinderteil 8 nach Fig. 4, z.B. eine Backe, stellt den Teil der Wechselvorrichtung dar, der die Verbindung vom Trägerelement 1 zum Backenbügel des Brillengestells herstellt. Dieses Verbinderteil 8 ist z.B. ein Kunststoffteil, das seitlich auf das Trägerelement 1 aufgeschoben wird und in einen Teil des Brillengestells, insbes. die Backe, integriert ist. Da aufgrund der erfindungsgemäßen Wechselvorrichtung der Brillenträger in die Lage versetzt wird, anstelle eines bestimmten Brillengestelles ein völlig anderes Brillengestell, und zwar anders in Hinblick auf Form, Design und Farbe, auszuwählen, ist es erforderlich, dass für ein optimales Aussehen das Verbinderteil 8 soweit über das Trägerelement 1 aus Metall geschoben werden kann, dass das Ende des metallenen Trägerelementes mit dem Ende des Verbinderteiles bündig abschließt. Die Figuren 4 und 5 zeigen in jeweils zwei unterschiedlichen, um 90° versetzten Ansichten gestrichelt das Trägerelement 1 mit den in Fig. 5 angedeuteten beiden Stiften, dem Gewindestift 5 und dem Positionierstift 6 (oder wahlweise einem weiteren Gewindestift im Brillenglas) sowie dem Balken 3 des Trägerelementes 1, während in Fig. 4 in Ansicht von unten voll ausgezogen die die Führung zum Aufschieben darstellende Aussparung 9 mit den beiden beidseitigen Ausbuchtungen 10 und 11 zur Aufnahme der Schäfte des Gewindestiftes 5 und des Positionierstiftes 6 zeigen. Das Verbinderteil 8 besteht vorzugsweise aus Kunststoff, ebenso die Begrenzungswandungen der Ausnehmung 9, die beim Aufstecken bzw. Aufschieben des Verbinderteiles auf das Trägerelement 1 an den geradlinigen Wandungsteilen 9 leicht deformiert werden, während die Stifte 5 und 6 in die Ausbuchtungen 10, 11 einrasten und somit eine definierte Position einnehmen, wenn der Schiebedruck aufgehoben wird. Mit 12 ist in Fig. 5 die Gelenkstelle angedeutet, an der der Backe und Bügel des Brillengestells gelenkig miteinander verbunden sind.

Die Figuren 6 und 7 zeigen jeweils eine schematische Darstellung der Verbindung des Trägerelementes 1 mit dem Brillenglas 7, in Fig. 6 in einer Sicht auf die Innenseite des Brillenglases, und in Fig. 7 in entgegengesetzter Position. Mit unterbrochenen Linien ist hierbei das aufgeschobene bzw. aufgesteckte Verbinderteil 8 dargestellt. Das Brillenglas 7 weist dabei eine Bohrung 5' zur Aufnahme eines Gewindestiftes 5 und eine offene Randbohrung 6' zur Aufnahme eines Positionierstiftes 6 auf.

Fig. 8 zeigt eine Brille mit Metallgestell, deren gesamter Mittelteil 13 einschließlich Steg 14 aus Metall besteht. An den Außenseitenstellen 15, 16 des Mittelteiles 13 sind Trägerelemente 17, 18 aus Metall in Form von Halteplättchen angeformt, die als Aufnahmeträger für in den vorausgehenden Figuren dargestellte Verbinderteile 8 zu den Backenteilen dienen. Bei dieser Ausführungsform sind die Trägerelemente 17, 18 nicht mit dem Brillenglas 7, sondern mit dem Mittelteil 13 des Rahmens selbst verbunden, so dass ein Eingriff in das Brillenglas nicht erforderlich ist, wenn ein Wechsel der Backenteile vorgenommen werden soll. Steg 14 und Nasenpads 20, 21 sind fest mit dem Metallrahmen-Mittelteil 13 verbunden.

Eine andere Ausführungsform für Brillengestelle aus Kunststoff mit Mittelteil 22 zeigt Fig. 9. Das Mittelteil besitzt hierbei an den seitlichen Außenbegrenzungen 23, 24 Ansätze 25, 26 mit Trägerelementen 27, 28. Auf das Trägerelement ist ein Verbinderteil 29 in Form einer Backe aufschiebbar bzw. aufsteckbar, das analog den in den vorausgehenden Figuren gezeigten ausgebildet ist und das über ein Drehgelenk 30 einen Backenbügel 32 aufnimmt, so dass auch bei dieser Variante ein Auswechseln der Backenbügel 32 ohne Eingriff in die Brillengläser ausführbar ist. Der Steg 31 kann bei dieser Ausführungsform aus Kunststoff oder aus Metall bestehen und ist integrierter Bestandteil des Mittelteils 22, wobei das Mittelteil im Stegbereich so ausgeformt ist, dass die sich vom Steg 31 nach abwärts verlaufenden, vom Brillenglas abgewandten Rahmenteile den Auflageflächen der Nase angepasst oder als Pads ausgebildet sind. Wahlweise können die Backenbügel 32 auch so ausgebildet sein, dass sie unmittelbar auf die Trägerelemente aufgeschoben werden können, ohne dass ein Verbinderteil oder eine Backe vorgesehen ist.

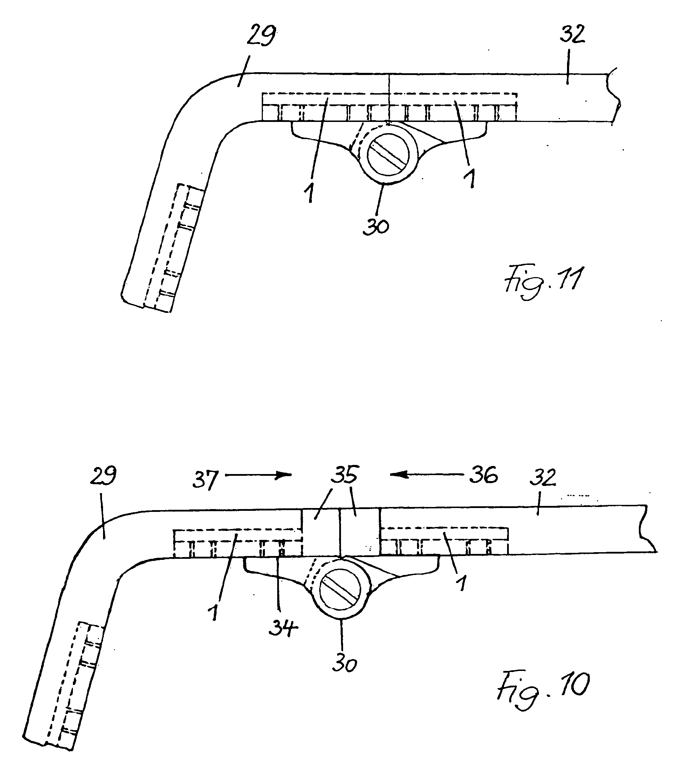

Mit der Ausführungsform nach den Figuren 10 und 11 ist ein Backenbügel 32 dargestellt, der über ein Verbinderteil (Backe) 29 mit dem (nicht dargestellten) Mittelstück des Brillengestells verbunden ist. Bügel 32 und Verbinderteil bzw. Backe 29 sind über ein gemeinsames Scharnier bzw. Drehgelenk 30 miteinander verbunden, dessen einer Scharnierteil 33 mit dem Bügel 32 und dessen anderer Scharnierteil 34 mit der Backe 29 verbunden ist. Zwischen Bügel 32 und Verbinderteil 29 sind Metallabschnitte 35 eingesetzt, die ebenfalls an dem Scharnier 30 befestigt sind. An der Innenseite der Scharnierteile 33, 34 ist jeweils ein Trägerelement 1 angeordnet, wie es in den Figuren 1 - 3 dargestellt ist, während sowohl der Bügel 32 als auch die Backe 29 jeweils ein Verbinderteil 8 aufweisen, das für den Wechselvorgang auf das jeweilige Trägerelement 1 aufgeschoben wird. Das Aufstecken des Verbinderteils 8 auf das Trägerelement 1 erfolgt in der durch Pfeil 36 bzw. 37 angegebenen Richtung. Dies geschieht in der in Fig. 4 dargestellten und in der in Zusammenhang mit Fig. 4 beschriebenen Weise.

Fig. 11 zeigt eine gegenüber der Darstellung nach Fig. 10 insofern abgeänderte Ausführungsform, als die beiden Metallteile 35, die mit den Scharnierteilen 33, 34 verbunden sind, entfallen.

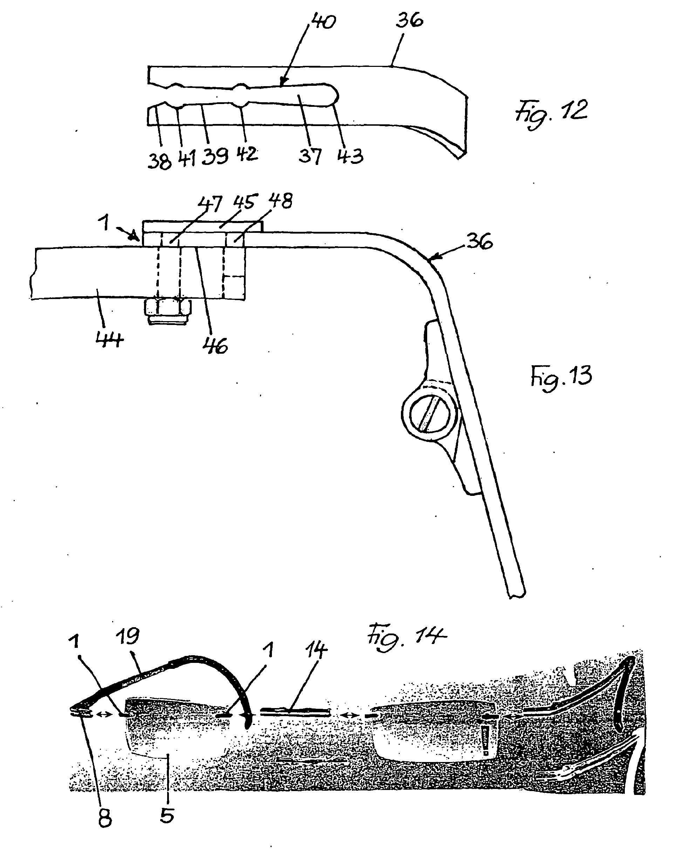

Fig. 12 zeigt eine Metallbacke 36 aus Federmaterial mit einer am glasseitigen Ende ausgebildeten schlitzförmigen Aussparung, 37, einer konischen Einführöffnung 38, zwei schlitzförmigen konischen Abschnitten 39, 40, die jeweils durch eine sich erweiternde Ausnehmung 41, 42 sowie eine Endausnehmung 43 abgeschlossen sind. Die Ausnehmungen 41, 42 dienen zur Aufnahme der Gewindestifte 5, 6 des Trägerelementes 1, und wirken als Arretierstellen beim Stecken der Backe auf das Trägerelement, wenn Teile des Brillengestells ausgewechselt werden sollen.

Wie in Fig. 13 dargestellt, ist bei dieser Ausführungsform das Trägerelement 1, das aus dem Balken 45 mit an der Unterseite 46 angeformten bzw. befestigten Gewindestiften 47 und 48 besteht, so auf dem Brillenglas 44 angeordnet, dass zwischen Unterseite 46 des Balkens 45 und dieser Unterseite zugewandten Oberfläche des Brillenglases 44 ein freier Raum zum Einschieben der Metallbacke 36 vorgesehen ist, wobei die Außenseite des Balkens 45 im Design der Sichtseite der Backe bzw. des Backenbügels angepasst ist und das Öffnungsende der Backe mit den beiden Zinken über die Schäfte 47 und 48 geschoben wird und die Schäfte jeweils in eine der Ausnehmungen 41, 42, 43 bis zum Anschlag einrasten und damit eine sichere Festlegung der Backe am Trägerelement ergeben.

Fig. 14 zeigt ein Bild einer Wechselbrille in Explosionsdarstellung, bei der jedem Brillenglas 5 auf der linken und der rechten Seite ein Trägerelement 1 zugeordnet ist, das zur Aufnahme des Verbinderteils 8, z.B. einer Backe mit anschließendem Backenbügel und einer Brücke im Nasenbereich zugeordnet ist, so dass der Wechsel des Brillengestells durch Steckverbinden des Verbinderteils 8 mit dem Trägerelement 1 bzw. der Brücke mit dem Trägerelement 1 in formschlüssiger Weise und bis zum Anschlag erfolgt. Der Vorgang des Steckens verläuft dabei in Pfeilrichtung, nämlich in einer Richtung parallel zur Ebene der Brillengläser sowohl beim Aufstecken der Backe von außen nach innen auf das zugeordnete Trägerelement 1 bzw. beim Aufstecken des Steges von innen nach außen auf das zugeordnete Trägerelement 1.

## Patentansprüche

1. Vorrichtung für Wechselbrillen zum Wechseln von mindestens einzelnen Teilen eines Brillengestells (13, 22) für Randlosbrillen oder für Vollrandbrillen, mit am Rand der Brillengläser (7) oder des Brillengestells (13; 22) festgelegten Trägerelementen (1; 18,28) zum tragenden Aufnehmen der Backen (8; 29) und der Brücke (14; 31), wobei das Trägerelement als ein im wesentlichen stab-, schienen- oder plättchenförmiges Bauteil ausgebildet ist, das am Brillenglas oder wahlweise am Bnillengestell mittels Gewindestift (5) und zusätzlichem Positionierstift (6) oder zweitem Gewindestift (6') befestigt und mit der Backe (8; 29) oder Brücke (14; 32) auswechselbar verbunden ist, **dadurch gekennzeichnet, dass** das Trägerelement (1; 18, 28) durch Aufstecken oder Aufschieben in einer Richtung parallel zur Ebene des Brillenglases (7) mit der Backe (8; 29) oder der Brücke (14, 32) formschlüssig verbunden ist, und dass das glasseitig angeordnete Ende der Backe (8; 29) oder der Brücke (14; 31) eine der Form und Größe des Trägerelementes angepasste Aussparung (9) von der Länge des Trägerelementes aufweist und mit diesem formschlüssig in Eingriff steht.

2. Vorrichtung nach Anspruch 1, **dadurch gekennzeichnet, dass** an den Innenseitenbegrenzungen der Aussparung (9) der Backe (8) Rastelemente (10, 11) vorgesehen sind, die mit dem Gewindestift (5) und dem Positionierstift (6) oder dem zweiten Gewindestift (6') nachgiebig zusammenwirkend ausgebildet sind.

3. Vorrichtung nach Anspruch 1 oder 2, **dadurch gekennzeichnet, dass** das Trägerelement (1; 18, 28) ein stab-, schienen- bzw. förmiges Kunststoffteil mit einem Gewindestift (5) aus Metall und einem zusätzlichen Positionierstift (6) oder wahlweise einem zweiten Gewindestift (6') aus Metall ist, dass das glasseitige Ende der Wechselbacke (29) aus Metall der Form des Trägerelementes (1) angepasste Ausnehmungen (10, 11) mit der Länge des Trägerelementes und mit diesem in Eingriff stehend aufweist, und dass die Ausnehmungen (10, 11) der Backe (8) mit den Stiften (5, 6, 6') als Raststellen an den Innenseitenbegrenzungen aus Metall ausgebildet sind.

4. Vorrichtung nach einem der Ansprüche 1 - 3, **dadurch gekennzeichnet, dass** der Schaft (4) des Trägerelementes (1) schmaler ausgelegt ist als der Durchmesser der beiden Stifte (5, 6), und dass die Backe (8) in Höhe der beiden Stifte (5, 6) Ausnehmungen (10, 11) in Form von Ausbauchungen zur rastenden Aufnahme der beiden Stifte (5, 6) aufweist.

5. Vorrichtung nach einem der Ansprüche 1 - 4, **dadurch gekennzeichnet, dass** das Trägerelement (1) in Form eines T-Balkens (3) ausgebildet ist, und dass der T-Balken eine im Vergleich zur Dicke der Backe (8) geringe Höhenabmessung hat.

6. Vorrichtung nach einem der Ansprüche 1 - 5, **dadurch gekennzeichnet, dass** das Trägerelement (1) aus Metall und die Backe (29) und/oder die Wechselbrücke (14, 32) aus Kunststoff besteht.

7. Vorrichtung nach einem der Ansprüche 1 - 6, **dadurch gekennzeichnet, dass** die Backen (36) und der Backenbügel (32) aus Federmaterial mit einer am glasseitigen Ende ausgebildeten, schlitzförmigen Aussparung (37) und darin angeordneten Ausnehmungen (41, 43) an den Seitenwandungen ausgebildet sind, die die Gewindestifte (5, 6) der Trägerelemente (1) an den Arretierstellen beim Aufschieben oder Aufstecken der Backe (36) auf das Trägerelement (1) formschlüssig aufnehmen.

8. Verfahren zum Wechseln von Brillengestellen für Randlosbrillen oder für Vollrandbrillen, bei denen die Backen (8, 19, 29) und/oder Brücken (14, 32) einschließlich Brillen- Mittelteil (22) von einem mit dem Wechsel - Brillengestell austauschbar verbundenen Trägerelement (1; 18, 27) aufgenommen werden, im Brillenglas (7) bzw. im Mittelteil (13, 22) des Brillengestells an der Brücke und/oder Backe Bohrungen (5') zur Aufnahme von Gewindestiften (5, 6) des Trägerelementes (1) erstellt werden, und das Trägerelement (1; 18, 27) mit zwei Gewindestiften (5, 6) aus Metall am Brillengestell (19, 22) oder am Brillenglas (7) festgelegt und mittels Schraubenmuttern festgezogen wird, **dadurch gekennzeichnet, dass** die Backe (8; 19, 29) auf das Trägerelement (1; 18, 27) in Richtung parallel zur Brillenglasebene aufgesteckt wird und die Ausnehmungen (10, 11) im Inneren der Backe mit dem Schaft (4) des Gewindestiftes (5) und dem Schaft des weiteren Gewindestiftes (6') des Trägerelementes in Rasteingriff gebracht werden.

9. Verfahren zum Wechseln von Brillengestellen nach Anspruch 8 für Randlosbrillen, **dadurch gekennzeichnet, dass**
a) an den seitlichen Außenbegrenzungen des Brillenglases (7) zum Anschluss an die Backen (8) bzw. Verbinderteile (8; 19, 29) jeweils ein Trägerelement (1) mit etwa T-förmigem Querschnitt und mit Gewindestiften (5, 6) oder Gewindestift (5) und Positionierstift (6) befestigt wird,
b) die Backe (8) bzw. der Backenbügel (32) aus Kunststoff eine der Form des Trägerelementes (1) angepasste Ausnehmung (10, 11) von der Länge des Trägerelementes (1) und dieses umgreifend aufweist, und
c) die Backe (8) auf das Trägerelement (1) soweit aufgeschoben wird, bis die Ausnehmungen (10, 11) im Inneren des Verbinderteiles mit dem Schaft (4) der Gewindestifte (5, 6) in Rasteingriff gebracht werden.

10. Verfahren zum Wechseln von Brillengestellen nach Anspruch 8, mit einem Mittelteil aus Metall oder Kunststoff, **dadurch gekennzeichnet, dass**
a) an den seitlichen Außenbegrenzungen (15, 16; 23, 24) des Mittelteils (13, 22) jeweils ein Ansatz (17, 18; 25, 26) am Mittelteilrahmen ausgebildet wird,
b) an dem Ansatz nach a) ein stabförmiges bzw. plättchenförmiges Trägerelement (1; 17, 18) aus Metall mit Gewindestiften (5, 6) befestigt wird,
c) das Verbinderteil bzw. der Backenbügel (19) mit einer der Form des Trägerelementes angepassten Ausnehmung (9) von der Länge des Trägerelementes (1) und dieses umgreifend versehen wird, und
d) die Backe (8) auf das Trägerelement (1) soweit aufgeschoben wird, bis die Ausnehmungen (10, 11) im Inneren des Verbinderteiles mit dem Schaft (4) der Gewindestifte in Rasteingriff gebracht werden. ,

11. Verfahren zum Wechseln von Backen bzw. Bügeln an Brillengestellen nach Anspruch 8, **dadurch gekennzeichnet, dass** die an das Mittelteil anschließende Backe (29) mit dem stationären Teil eines Metallscharniers (30) und der Backenbügel (32) mit dem schwenkbaren Teil des Metallscharniers (30) befestigt ist, und dass die Backe eine der Form des Trägerelementes (1) angepasste Ausnehmung (9) von der Länge des Trägerelementes hat und dieses umgreift.

12. Verfahren zum Wechseln von Backen bzw. Bügeln an Brillengestellen nach Anspruch 8, **dadurch gekennzeichnet, dass**
a) die Backe (36) als Metallbügel aus federndem Material mit einer schlitzartigen Ausnehmung (37) und mindestens zwei hintereinander angeordneten Raststellen (41, 42, 43) zum formschlüssigen Aufnehmen der beiden Gewindestifte (5, 6) ausgebildet ist,
b) der glasseitige Backenteil (36) zwischen Glasoberseite (44) und Unterseite (46) des T-Balkens (45) des Trägerelementes (1) eingeschoben oder eingesteckt wird, und
c) die Schäfte (47, 48) der Gewindestifte (5, 6) unter Druck und formschlüssig soweit eingeschoben oder eingesteckt werden, dass sie in den Raststellen (41, 42, 43) arretiert werden.

## Claims

1. Device for interchangeable eyeglasses for changing at least some individual parts of an eyeglass frame (13, 22) for rimless eyeglasses or for full-framed eyeglasses, with support elements (1;18, 28) fixed on the edge of the eyeglass lenses (7) or eyeglass frame (13;22) for supporting and holding the side arms (8; 29) and the bridge (14;31) wherein the support element is designed as a substantially rod-, rail- or plate-type component part which is fixed on the eyeglass lens or selectively on the glasses frame by means of a threaded pin (5) and additional positioning pin (6) or second threaded pin (6') and is connected interchangeable to the side arm (8; 29) or bridge (14;32), **characterised in that** the support element (1; 18, 28) is connected with positive-locking engagement to the side arm (8; 29) or bridge (14, 32) by pushing on or sliding in a direction parallel to the plane of the eyeglass lens (7), and that the end of the side arm (8; 29) or bridge (14; 31) disposed at the lens side has a recess (9) adapted to the shape and size of the support element and with the length of the support element so that this end engages with positive locking with this support element.

2. Device according to claim 1 **characterised in that** on the inner side boundaries of the recess (9) of the side arm (8) there are detent elements (10, 11) which are designed to interact flexibly with the threaded pin (5) and the positioning pin (6) or the second threaded pin (6').

3. Device according to claim 1 or 2 **characterised in that** the support element (1; 18, 28) is a rod, rail or shaped plastics part with a threaded pin (5) of metal and an additional positioning pin (6) or selectively a second threaded pin (6') of metal, that the lens-side end of the changeable side arm (29) has recesses (10, 11) adapted to the shape of the support element (1) with the length of the support element and is in positive engagement with the support element, and that the recesses (10, 11) of the side arm (8) are formed with the pins (5, 6, 6') as detent points on the inner side boundaries of metal.

4. Device according to one of claims 1 to 3 **characterised in that** the shaft (4) of the support element (1) is made narrower than the diameter of the two pins (5, 6) and that the side arm (8) has level with the two pins (5, 6) recesses (10, 11) in the form of bulges for detent holding of the two pins (5, 6).

5. Device according to one of claims 1 to 4 **characterised in that** the support element (1) is designed in the form of a T-bar (3), and that the T-bar has a vertical dimension which is small compared to the thickness of the side arm (8).

6. Device according to one of claims 1 to 5 **characterised in that** the support element (1) is made of metal and the side arm (29) and/or the interchangeable bridge (14, 32) is made of plastics.

7. Device according to one of claims 1 to 6 **characterised in that** the side arms (36) and the side arm piece (32) are made from spring material with a slot-type recess (37) formed at the lens-side end and recesses (41, 43) arranged therein on the side walls which receive with locking engagement the threaded pins (5, 6) of the support elements (1) at the locking points when sliding or pushing the side arm (36) onto the support element (1).

8. Method for changing eyeglass frames for rimless eyeglasses or for full-framed eyeglasses in which the side arms (8, 19, 29) and/or bridges (14, 32) including the eyeglasses centre part (22) are received by a support element (1; 18, 27) which is connected interchangeable to the interchangeable glasses frame, bores (5') are formed in the eyeglass lens (7) or in the centre part (13, 22) of the glasses frame on the bridge and/or side arm in order to receive the threaded pins (5, 6) of the support element (1), and the support element (1; 18, 27) is fixed by two threaded pins (5, 6) of metal on the glasses frame (19, 22) or on the eyeglass lens (7) and is tightened by screw nuts , **characterised in that** the side arm (8; 19, 29) is pushed onto the support element (1; 18, 27) in a direction parallel to the plane of the eyeglass lens and the recesses (10, 11) on the inside of the side arm are brought into detent engagement with the shaft (4) of the threaded pin (5) and the shaft of the additional threaded pin (6') of the support element.

9. Method for changing eyeglass frames according to claim 8 for rimless glasses, **characterised in that**
a) on each of the side outer boundaries of the eyeglass lens (7) for connecting to the side arms (8) or connector parts (8; 19, 29) is fixed a support element (1) with an approximately T-shaped cross-section and with threaded pins (5, 6) or with threaded pin (5) and positioning pin (6);
b) the side arm (8) or side arm piece (32) of plastics has a recess (10, 11) adapted to the shape of the support element (1) with the length of the support element (1) to engage round same, and
c) the side arm (8) is pushed onto the support element (1) so far until the recesses (10, 11) inside the connector part are brought into detent engagement with the shaft (4) of the threaded pins (5, 6).

10. Method for changing eyeglass frames according to claim 8, with a centre part of metal or plastics, **characterised in that**
a) on each of the side outer boundaries (15, 16; 23, 24) of the centre part (13, 22) there is an extension (17, 18; 25, 26) formed on the centre part frame
b) a rod-shaped or plate-shaped support element (1; 17, 18) of metal is fixed with threaded pins (5, 6) on the extension according to a),
c) the connector part or the side piece (19) is provided with a recess (9) adapted to the shape of the support element and having the length of the support element (1) to engage round same, and
d) the side arm (8) is pushed so far onto the support element (1) until the recesses (10, 11) inside the connector part are brought into detent engagement with the shaft (4) of the threaded pins.

11. Method for changing the side arms or side pieces on eyeglass frames according to claim 8 **characterised in that** the side arm (29) adjoining the centre part is fixed to the stationary part of a metal hinge (30) and the side piece (32) is fixed to the swivel part of the metal hinge (30), and that the side arm has a recess (9) adapted to the shape of the support element (1) and with the length of the support element to engage round same.

12. Method for changing side arms or side pieces or both on eyeglass frames according to claim 8 **characterised in that**
a) the side arm (36) is formed as a metal side piece of spring material with a slot-type recess (37) and at least two detent points (41, 42, 43) arranged in succession for positive holding of the two threaded pins (5, 6),
b) the lens-side side arm part (36) is inserted or pushed between the top side (44) of the lens and the bottom (46) of the T-bar (45) of the support element (1), and
c) the shafts ( 47, 48) of the threaded pins (5, 6) are inserted or pushed under pressure with positive locking until they are locked in the detent points (41, 42, 43).

## Revendications

1. Dispositif pour lunettes de rechange pour changer au moins des parties individuelles d'une monture de lunettes (13, 22) pour des lunettes sans bord ou à bord plein, comprenant des éléments de support (1 ; 18,28) fixés au bord des verres de lunettes (7) ou de la monture de lunettes (13 ; 22) pour supporter les branches (8; 29) et le pontet (14 ; 31), dans lequel l'élément de support se présente sous la forme d'un composant sensiblement en forme de barrette, de rail ou de plaquette, qui est fixé sur le verre de lunettes ou au choix sur la monture de lunettes au moyen d'une tige filetée (5) et d'une tige de positionnement (6) supplémentaire ou d'une seconde tige filetée (6') et qui est raccordé de manière échangeable à la branche (8 ; 29) ou au pontet (14 ; 32), **caractérisé en ce que** l'élément de support (1 ; 18, 28) est raccordé par adaptation de forme à la branche (8 ; 29) ou au pontet (14, 32) par enfichage ou enfilage dans une direction parallèle au plan du verre de lunettes (7) et **en ce que** l'extrémité agencée côté verre de la branche (8 ; 29) ou du pontet (14 ; 31) présente un évidement (9) adapté à la forme et à la taille de l'élément de support et de la longueur de l'élément de support et est en prise avec celui-ci par adaptation de forme.

2. Dispositif selon la revendication 1, **caractérisé en ce qu'**il est prévu sur les limites latérales internes de l'évidement (9) de la branche (8) des éléments d'encliquetage (10, 11), qui sont formés de manière à coopérer de façon flexible avec la tige filetée (5) et la tige de positionnement (6) ou la seconde tige filetée (6').

3. Dispositif selon la revendication 1 ou 2, **caractérisé en ce que** l'élément de support (1 ; 18, 28) est une pièce en matériau synthétique en forme de barrette, de rail ou de plaquette avec une tige filetée (5) en métal et une tige de positionnement (6) supplémentaire ou, au choix, une seconde tige filetée (6') en métal, **en ce que** l'extrémité côté verre de la branche de rechange (29) en métal présente des creux (10, 11) adaptés à la forme de l'élément de support (1) de même longueur que celle de l'élément de support et en prise avec celui-ci et **en ce que** les creux (10, 11) de la branche (8) sont formés de métal avec les tiges (5, 6, 6') comme points d'encliquetage sur les limites latérales internes.

4. Dispositif selon l'une quelconque des revendications 1 à 3, **caractérisé en ce que** le tronc (4) de l'élément de support (1) est dimensionné plus étroit que le diamètre des deux tiges (5, 6) et **en ce que** la branche (8) présente, à la hauteur des deux tiges (5, 6), des creux (10, 11) sous la forme de renflements pour recevoir les deux tiges (5, 6).

5. Dispositif selon l'une quelconque des revendications 1 à 4, **caractérisé en ce que** l'élément de support (1) se présente sous la forme d'une branche en T (3) et **en ce que** la branche en T a une dimension en hauteur plus faible que l'épaisseur de la branche (8).

6. Dispositif selon l'une quelconque des revendications 1 à 5, **caractérisé en ce que** l'élément de support (1) est constitué de métal et la branche (29) et/ou le pontet de rechange (14, 32) est ou sont constitués d'un matériau synthétique.

7. Dispositif selon l'une quelconque des revendications 1 à 6, **caractérisé en ce que** la branche (36) et l'attache de branche (32) sont formées d'un matériau élastique avec un évidement (37) en forme de fente ménagé à l'extrémité côté verre et des creux (41, 43) qui y sont ménagés sur les parois latérales, qui reçoivent par adaptation de forme les tiges filetées (5, 6) des éléments de support (1) aux points de blocage lorsque la branche (36) est enfichée ou enfilée sur l'élément de support (1).

8. Procédé pour changer des montures de lunettes sans bord ou à bord plein, dans lequel les branches (8, 19, 29) et/ou les pontets (14, 32), y compris la partie centrale de lunettes (22), sont reçus par un élément de support (1 ; 18, 27) raccordé de manière interchangeable à la monture de lunettes de rechange, des perçages destinés à recevoir les tiges filetées (5, 6) de l'élément de support (1) sont effectués dans le verre de lunettes (7) ou dans la partie centrale (13, 22) de la monture de lunettes au niveau du pontet et/ou de la branche et l'élément de support (1 ; 18, 27) est fixé avec deux tiges filetées (5, 6) en métal sur la monture de lunettes (19, 22) ou sur le verre de lunettes (7) et serré au moyen d'écrous, **caractérisé en ce que** la branche (8 ; 19, 29) est enfichée sur l'élément de support (1 ; 18, 27) dans une direction parallèle au plan du verre de lunettes et les creux (10, 11) sont amenés en prise par encliquetage à l'intérieur de la branche avec le tronc (4) de la tige filetée (5) et le tronc de l'autre tige filetée (6') de l'élément de support.

9. Procédé pour changer des montures de lunettes selon la revendication 8 pour lunettes sans bord, **caractérisé en ce que**
a) un élément de support (1) de section transversale à peu près en forme de T et avec des tiges filetées (5, 6) ou une tige filetée (5) et une tige de positionnement (6) est fixé respectivement sur les limites latérales externes du verre de lunettes (7) pour se raccorder sur les branches (8) ou sur les parties de raccordement (8 ; 19, 29), respectivement,
b) la branche (8) ou l'attache de branche (32) en matériau synthétique présente un creux (10, 11) adapté à la forme de l'élément de support (1), de la longueur de l'élément de support (1) et enveloppant celui-ci, et
c) la branche (8) est enfilée sur l'élément de support (1) jusqu'à amener en prise par encliquetage les creux (10, 11) à l'intérieur de la partie de raccordement avec le tronc (4) de la tige filetée (5, 6).

10. Procédé pour changer des montures de lunettes selon la revendication 8, avec une partie centrale en métal ou en matériau synthétique, **caractérisé en ce que**,
a) aux limites latérales externes (15, 16 ; 23, 24) de la partie centrale (13, 22), une saillie (17, 18 ; 25, 26) est formée respectivement sur le cadre de la partie centrale,
b) un élément de support (1 ; 17, 18) en métal, en forme de barrette ou de plaquette et comprenant des tiges filetées (5, 6) est fixé sur la saillie selon a),
c) la partie de raccordement ou l'attache de branche (19) est dotée d'un creux (9) adapté à la forme de l'élément de support, de la longueur de l'élément de support (1) et enveloppant celui-ci, et
d) la branche (8) est enfilée sur l'élément de support (1) jusqu'à ce que les creux (10, 11) à l'intérieur de la partie de raccordement soient amenés en prise par encliquetage avec le tronc (4) des tiges filetées.

11. Procédé pour changer des branches sur des montures de lunettes selon la revendication 8, **caractérisé en ce que** la branche (29) se raccordant à la partie centrale est fixée à la partie stationnaire d'une charnière métallique (30) et l'attache de branche (32) est fixée à la partie pivotante de la charnière métallique, et **en ce que** la branche a un creux (11) de la longueur de l'élément de support (1), adapté à la forme de l'élément de support (1), et entoure celui-ci.

12. Procédé pour changer des branches ou des attaches sur des montures de lunettes selon la revendication 8, **caractérisé en ce que**
a) la branche (36) se présente sous la forme d'une attache métallique en matériau élastique avec un creux (37) en forme de fente et au moins deux points d'encliquetage (41, 42, 43) aménagés l'un derrière l'autre pour la réception par adaptation de forme des deux tiges filetées (5, 6),
b) la partie de branche côté verre (36) est enfilée ou enfichée entre la face supérieure de verre (44) et la face inférieure (46) de la branche en T (45) de l'élément de support (1), et
c) les troncs (47, 48) des tiges filetées (5, 6) sont enfilés ou enfichés sous pression et par adaptation de forme jusqu'à ce qu'ils soient bloqués dans les points d'encliquetage (41, 42, 43).
